# EUROPEAN PATENT SPECIFICATION

(11) **EP 3 331 151 B1**
(45) Date of publication and mention of the grant of the patent: **22.06.2022**
(21) Application number: 16830314.7
(22) Date of filing: 13.07.2016
(51) Int. Cl.: H02P 8/38, H02P 6/16, H02P 6/18

(54) **POWER CONVERSION DEVICE AND POWER CONVERSION DEVICE CONTROL METHOD**
LEISTUNGSUMWANDLUNGSVORRICHTUNG UND LEISTUNGSUMWANDLUNGSVORRICHTUNGSTEUERUNGSVERFAHREN
DISPOSITIF DE CONVERSION DE PUISSANCE ET PROCÉDÉ DE COMMANDE DE DISPOSITIF DE CONVERSION DE PUISSANCE

(30) Priority: 27.07.2015 JP 2015147345
(43) Date of publication of application: 06.06.2018
(73) Proprietor: Hitachi Industrial Equipment Systems Co., Ltd., Tokyo 101-0022 (JP)
(72) Inventor: IWASE Yuuta, Tokyo 101-0022 (JP); OHASHI Hironori, Tokyo 101-0022 (JP); TAGUCHI Yoshiyuki, Tokyo 101-0022 (JP); KOBAYASHI Youhei, Narashino-shi Chiba 275-0001 (JP)
(74) Representative: Mewburn Ellis LLP
(86) International application number: PCT/JP2016/070623
(87) International publication number: WO 2017/018209

(56) References cited:
- CN-A- 103 368 477
- CN-B- 101 192 803
- CN-C- 1 293 701
- JP-A- H10 325 392
- JP-A- 2000 295 886
- JP-A- 2007 166 695
- JP-A- 2009 124 870
- JP-A- 2014 033 616
- JP-A- 2014 147 239
- US-A1- 2008 252 242
- US-A1- 2014 084 825

## Description

### TECHNICAL FIELD

The present invention relates to a power conversion device, and a power conversion device control method.

### BACKGROUND ART

Permanent magnet synchronous motors with higher efficiency than conventional induction motors are becoming widespread in the industrial field or to be used in refrigeration equipment. A permanent magnet synchronous motor rotates by input of a rotating magnetic field in synchronization with a magnetic pole position of a permanent magnet in a rotor. In a state where the magnetic pole position and the rotating magnetic field are not synchronized, rotation is not performed, and a step-out state is reached and control is disabled. Accordingly, to control operation of the permanent magnet synchronous motor, a power conversion device capable of magnetic pole position detection becomes necessary. As a means of magnetic pole position detection, there is a magnetic pole position sensor, for example. The magnetic pole position sensor may be an encoder, a resolver, a Hall element or the like. Position information is detected by the magnetic pole position sensor at least twice for each rotation of the rotor, and pieces of position information are input to the power conversion device, and operation is controlled while recognizing the magnetic pole position.

On the other hand, in recent years, operation is controlled sometimes by a magnetic pole position sensorless method not using the magnetic pole position sensor. In the case of the magnetic pole position sensorless method, the permanent magnet synchronous motor is controlled by estimating the magnetic pole position based on a phase of a detected current, for example, and thus, when a load is varied or at the time of a high load, the rotor of the permanent magnet synchronous motor may become asynchronous with the rotating magnetic field formed by the power conversion device, and a step-out state may be caused. If a step-out state is caused in the magnetic pole position sensorless method of estimating the magnetic pole position, the step-out may not be estimated, and thus, in the case of using the magnetic pole position sensorless method, a power conversion device which is capable of reliably detecting step-out is necessary.

As conventional techniques for detecting step-out, there are Patent Literature 1 (JP-A-2000-295886) disclosing "a step-out detection unit for detecting whether or not an angle difference between an angular position of a magnetic axis of the rotor determined based on a detection signal of the magnetic pole position sensor and the rotating magnetic field angle exceeds a predetermined set value", and Patent Literature 2 (JP-A-2014-147239) disclosing "a power conversion device including: an axis error estimator that estimates an axis error between a control axis and a rotor pole axis of the synchronous motor based on the voltage command and a current detected by the current detector; a frequency component extractor that extracts an arbitrary frequency component of the axis error estimated by the axis error estimator; and a step-out determination unit that determines whether or not there is step-out based on the frequency component extracted by the frequency component extractor".

As a method of starting a magnetic pole sensorless permanent magnet synchronous motor, Patent Literature 3 (JP-A-2014-33616) discloses a "drive device for exciting, at the time of starting, a start excitation pattern of a phase allowing generation of a maximum torque at a position of a rotor, gradually increasing a rotation speed, and then, stopping the energization by making a duty cycle of the pulse modulation signal 0% and causing the rotor of the brushless motor to free run, and determining an excitation timing by detecting a rotor position based on an induced voltage generated at a motor terminal during free run, and obtaining great acceleration to stably start the rotor".

US2008/252242A1 discloses a motor driving apparatus that has a loss-of-synchronism monitoring circuit that monitors the rotation of a rotary machine such as a brushless DC motor to detect a sign of transition to a state of loss of synchronism. When the sign is detected, an energization control circuit temporarily stops driving of the rotary machine to bring it into a free running state, and thereafter carries out control so as to resume driving of the rotary machine. Further, the motor driving apparatus has an inverter and a drive control circuit that controls switching operation of the inverter based on rotation of the rotary machine.

JPH10325392A discloses a micro computer of a pump drive controlling device that measures the number of cycle of pattern of a position input sent by a comparator and detects the number of revolutions of the pump based on the number of cycles of pattern and then compares the detected number of revolutions with a threshold relating to the number of revolutions to judge the operating state of the pump, such as normal running, idle running, stepping out, and locking. If the pump is operated at the idle running state, a rotor might be seized, and if the pump is operated at the stepping out or locking state, a large current is passed through an electric circuit to have a harmful effect on elements, which reduces the reliability of a potential circuit.

### CITATION LIST

### PATENT LITERATURE

PATENT LITERATURE 1: JP-A-2000-295886
PATENT LITERATURE 2: JP-A-2014-147239
PATENT LITERATURE 3: JP-A-2014-33616

### SUMMARY OF INVENTION

### TECHNICAL PROBLEM

However, according to the method disclosed in Patent Literature 1, three signals Pu, Pv, Pw are detected by the magnetic pole position sensor to detect step-out, and thus, a sensor which is capable of detecting magnetic pole positions in three phases is necessary, and cost increase is unavoidable.

Furthermore, according to the technique of Patent Literature 2, if a rotor is even slightly rotating by a harmonic component at an application voltage command frequency, for example, step-out is possibly not detected.

Moreover, the technique of Patent Literature 3 is for stabilizing starting, and although step-out is possibly caused due to application of an impact load at the time of start or due to variation in the load at a time other than the start, detection means for such step-out is not included. Furthermore, three comparators are required in an induced voltage detection circuit, resulting in a cost increase.

Accordingly, the present application has its object to provide a power conversion device and a power conversion device control method which enable highly reliable step-out detection without the use of a magnetic pole position detection sensor.

### SOLUTION TO PROBLEM

To solve the problems described above, configurations in the claims are adopted.

According to a first aspect of the present invention there is provided a power conversion device as specified in claim 1. The power conversion device according to the first aspect of the present invention may optionally be as specified in any one of claims 2 to 5.

According to a second aspect of the present invention there is provided a power conversion device control method as specified in claim 6.

The power conversion device control method according to the second aspect of the present invention may optionally be as specified in any one of claims 7 to 10.

### ADVANTAGEOUS EFFECTS OF INVENTION

According to the present invention, a power conversion device and a power conversion device control method which enable highly reliable step-out detection without the use of a magnetic pole position detection sensor may be provided.

### BRIEF DESCRIPTION OF DRAWINGS

[FIG. 1] FIG. 1 is a schematic configuration diagram of a power conversion device according to the present invention.
[FIG. 2] FIG. 2 is a schematic configuration diagram of a frequency detection circuit.
[FIG. 3] FIG. 3 is a timing chart for the frequency detection circuit.
[FIG. 4] FIG. 4 is a timing chart of step-out determination.
[FIG. 5] FIG. 5 is a flowchart of processing by a step-out determination unit.

### DESCRIPTION OF EMBODIMENTS

A power conversion device of a present embodiment is suitably used in a rotating machine drive appliance, a freezer or the like. In the following, specific control will be described.

### <First Embodiment>

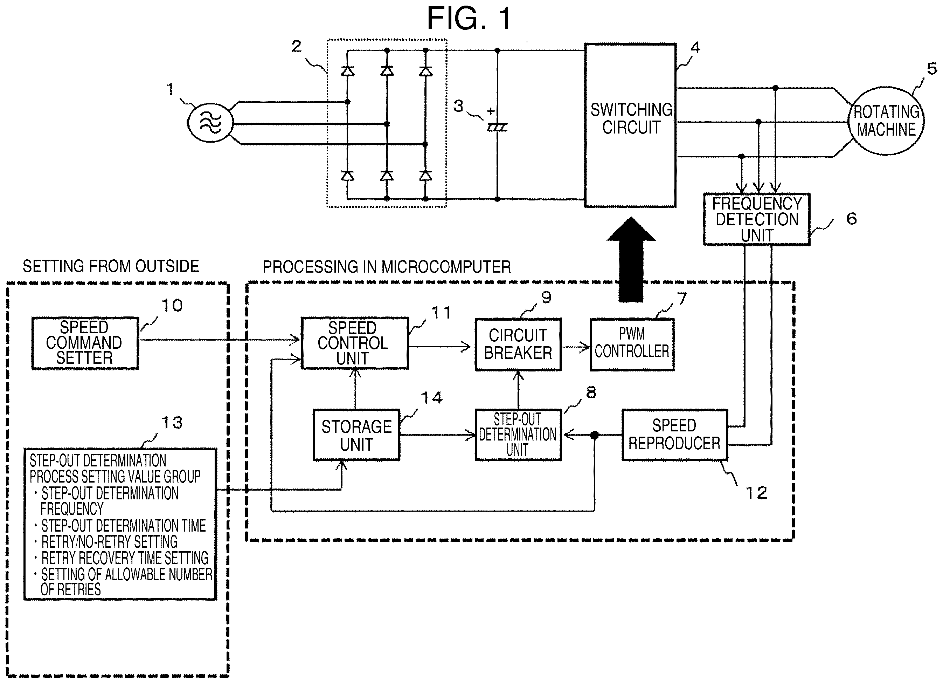

A first embodiment will be described with reference to FIGS. 1 to 4.

FIG. 1 shows a schematic configuration of a power conversion device. The power conversion device is a device that operates a rotating machine 5 by converting an AC power source 1 into a DC power source and supplying DC power to a switching circuit 4 to cause the switching circuit 4 to perform switching. Moreover, to determine whether the rotating machine 5 is stepped out, a speed control unit 11 temporarily places the rotating machine 5 in a stop state at the time of acceleration of the rotating machine 5 and places the rotating machine 5 in a free run state, and a frequency detection unit 6, a speed reproducer 12, a step-out determination unit 8, and a circuit breaker 9 detect step-out of the rotating machine 5 based on an induced voltage of the rotating machine in the free run state and perform a protection operation. In the case where operation is performed with no step-out, the rotating machine 5 is re-accelerated from the speed of free run rotation to continue the operation. Moreover, a step-out determination process setting value group 13, which is a condition for detection of step-out, may be set in advance in a storage unit 14 or may be arbitrarily externally set, and setting values are adjusted as appropriate based on the rotating machine 5, the size of a load connected thereto, and the moment of inertia.

### (Device Configuration)

The power conversion device includes a rectifier 2 connected to the AC power source 1, a smoothing capacitor 3 serially connected to the DC side of the rectifier 2, the switching circuit 4 for converting AC power to DC power, a PWM controller 7 for controlling the switching circuit 4, the frequency detection unit 6 connected to each of three motor cables connecting the switching circuit 4 and the rotating machine 5, the speed reproducer 12 for calculating a detection speed from two signals from the frequency detection unit 6, and for outputting the detection speed, the step-out determination unit 8 for determining step-out based on the detection speed output from the speed reproducer 12 and the step-out determination process setting value group 13 set externally or set in advance in the storage unit 14, which is a non-volatile memory such as a flash memory, and for outputting a step-out detection signal after performing a step-out protection operation, a speed command setter 10 for externally setting an arbitrary target speed, a speed control unit 11 for calculating a rotation speed command value based on the target speed output from the speed command setter 10, the detection speed output from the speed reproducer 12, and the step-out determination process setting value group 13 set in the storage unit 14, and for outputting the rotation speed command value, and the circuit breaker 9 for controlling operation of the PWM controller 7 by blocking the frequency command value according to the step-out detection signal output from the step-out determination unit 8.

### (Frequency Detection Unit)

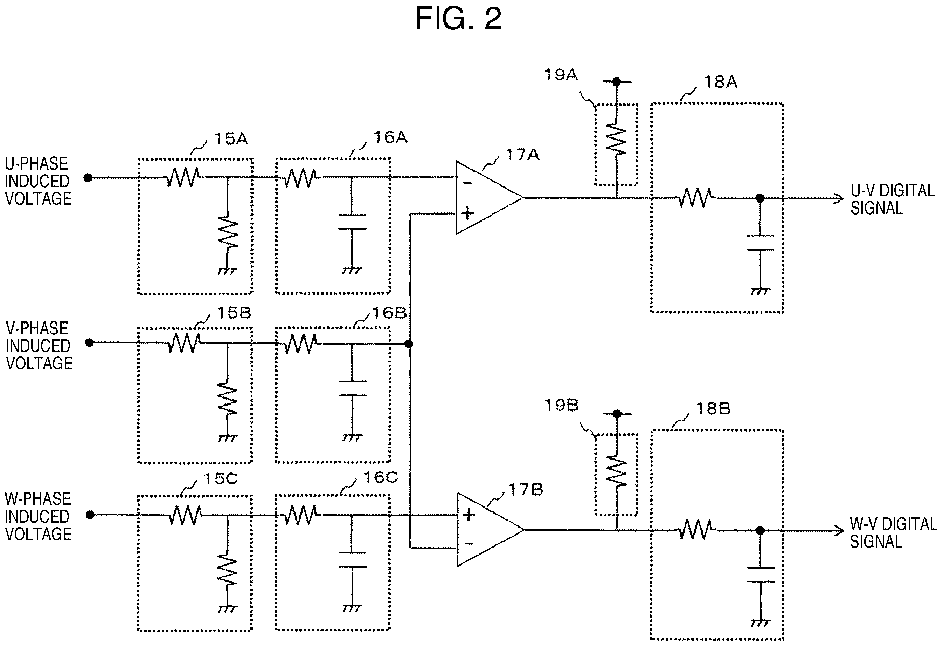

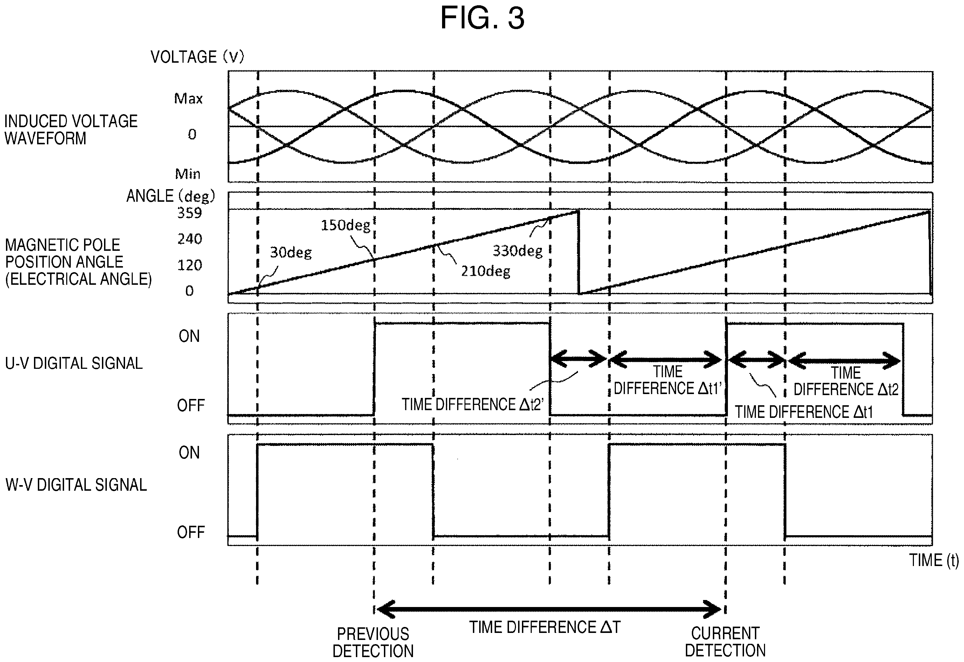

FIG. 2 is a circuit configuration diagram of the frequency detection unit 6, and FIG. 3 is a timing chart of an induced voltage and digital signals. The frequency detection unit 6 generates two digital signals containing information about a rotation speed, a rotation direction, and a magnetic pole position of the rotating machine 5, based on a magnitude relationship of induced voltages of three phases generated at the time of the rotating machine 5 rotating in a free run state. Specifically, when the rotating machine is rotating in a free run state, an induced voltage is generated by the rotating machine 5. When observation of the induced voltage is performed between lines of a U-phase, a V-phase, and a W-phase, voltage waveforms are as shown in FIG. 3, and are three-phase alternating currents whose phases are shifted from each other by 120 degrees. When the induced voltage is divided by divider resistors 15A, 15B, 15C in the manner shown in FIG. 2, the comparators 17A, 17B output digital signals based on the magnitude relationship of the induced voltages. Here, because the speed reproducer 12 described later is capable of acquiring information about the rotation speed, the rotation direction, and the magnetic pole position from the two digital signals of the comparators 17A, 17B, a comparator for W-U phase voltage is removed. Moreover, filter time constants of input filters 16A, 16B, 16C and output filters 18A, 18B are selected while observing digital signals so that time constants allowing removal of noise may be selected. Moreover, a pull-up resistor 19A, 19B places a digital signal in an on state from immediately after activation of the present device until the power of the comparator is turned on, so that chattering of the digital signal is not caused.

### (Speed Reproducer)

The digital signal shown in FIG. 3 is turned on/off according to the phase of the induced voltage generated by rotation of the rotating machine 5 in a free run state, and thus, the rotation speed, the rotation direction, and the magnetic pole position may be estimated by the speed reproducer 12.

First, with respect to the rotation speed, a rise (on) timing of the digital signal is detected each time, and a time difference ΔT between previous detection and current detection is measured, for example. It is also possible to measure the time difference for the fall (off) of the signal, or for both the rise and fall. In the case where the time difference is measured for both the rise and fall, the number of times of detection at the time of one rotation of the rotating machine 5 is doubled, and the detection accuracy of the speed reproducer 12 can be increased. A frequency is calculated based on the measured time difference ΔT, and is output as a detection speed Ffb of the rotating machine 5. Next, estimation of the rotation direction is performed by measuring the times of the rise (on) and fall (off) timings of the two digital signals. For example, in the case of forward rotation, when a rise (on) timing of a U-V digital signal is taken as the starting point, time difference Δt1 > time difference Δt2 is established between the time difference Δt1 to the fall (off) of a W-V digital signal which is detected next, and the time difference Δt2 between the fall (off) of the W-V digital signal and the fall (off) of the U-V digital signal which is detected next. On the other hand, in the case of reverse rotation, when a rise (on) timing of the U-V digital signal is taken as the starting point, time difference Δt1' < time difference Δt2' is established between the time difference Δt1' to the fall (off) of the W-V digital signal which is detected next, and the time difference Δt2' between the fall (off) of the W-V digital signal and the fall (off) of the U-V digital signal which is detected next. The speed reproducer 12 estimates the rotation direction based on a magnitude relationship between the time difference Δt1 and the time difference Δt2 or between the time difference Δt1' and the time difference Δt2'.

Next, estimation of the magnetic pole position will be described. Because the induced voltage phase of the rotating machine 5 is linked to the magnetic pole position, there is a total of four timings of rise and fall of the two digital signals linked to the induced voltage phase during one rotation cycle of the electrical angle of the rotor of the rotating machine 5, as shown in FIG. 3. For example, in the case where the detection timings are at magnetic pole position angles of the rotating machine 5 of 30 degrees, 150 degrees, 210 degrees, 330 degrees, a microcomputer performs an update process of internal position information calculated in the microcomputer directly at the timing of corresponding rise or fall. Moreover, at times other than the timings of rise and fall, the microcomputer constantly updates the internal position information, which is synchronized with the magnetic pole position of the rotating machine 5, by adding, at every cycle, a position update amount θstep for updating the internal position information at an arbitrary calculation cycle according to the detection speed Ffb. Furthermore, in the case of directly updating the internal position information at the timing of rise or fall, there may occur a position deviation Δθ from the internal position information updated by the microcomputer at the arbitrary calculation cycle. In such a case, the position update amount θstep is corrected by PI control so as to make the position deviation Δθ "0", and the magnetic pole position is constantly estimated during free run. The magnetic pole position is not estimated during operation in a state other than free run. This is because observation of the induced voltage of the rotating machine 5 cannot be performed when the switching circuit 4 is operating.

### (Speed Control Unit)

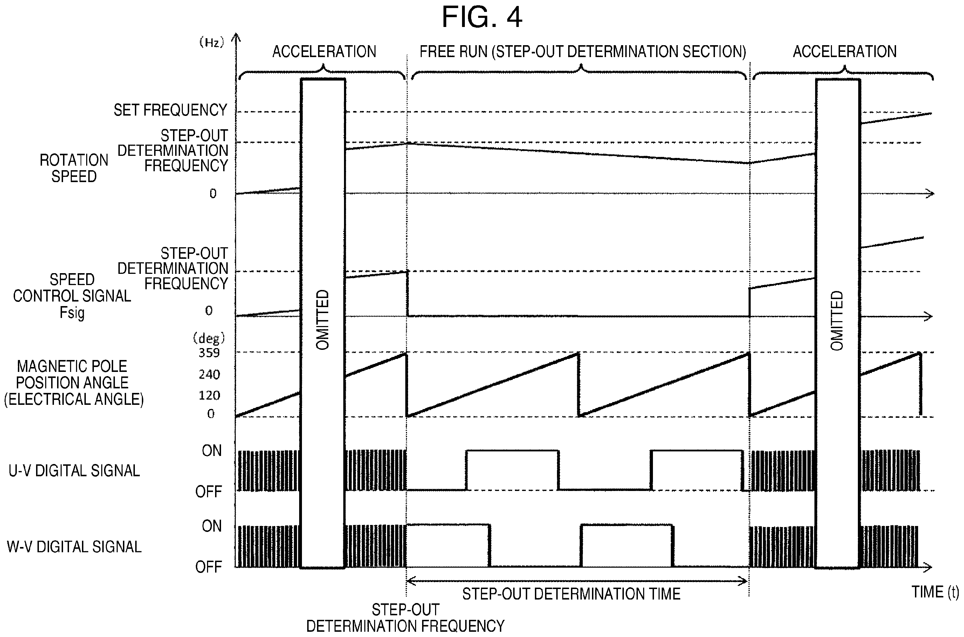

The timing chart of the rotating machine shown in FIG. 4 shows a process of the speed control unit 11 accelerating the rotating machine 5 from a stop state to a rotation speed set by the speed command setter 10, based on a speed command Fref output from the speed command setter 10 and the detection speed Ffb output from the speed reproducer 12. The rotating machine 5 is gradually accelerated from the stop state to the rotation speed (set frequency) that is set, but for example, when a load is rapidly changed during acceleration, deceleration or constant speed operation, a state (step-out state) is possibly reached where control is not possible due to the rotating magnetic field formed by the power conversion device controlling the switching circuit 4 and the magnetic pole of the rotating machine 5 becoming offset from each other. Accordingly, the speed control unit 11 turns off the switching circuit 4 once during acceleration, when a step-out determination frequency in the step-out determination process setting value group 13 set in advance in the storage unit 14 or set externally in the storage unit 14 is reached, so as to place the rotating machine 5 in a free run state. Then, after a lapse of a step-out determination time in the step-out determination process setting value group 13 set in the storage unit 14 or set externally in the storage unit, acceleration is started from the number of rotations in the free run state to the set frequency, and a time slot when the state is the free run state is thus produced during acceleration. The speed reproducer 12 may thereby estimate the rotation speed, the rotation direction, and the magnetic pole position. The speed reproducer 12 operates only when the rotating machine 5 is in the free run state, because the speed reproducer 12 cannot accurately operate in a state which is not the free run state, that is, during operation of the rotating machine 5 when switching is performed by the switching circuit 4. The step-out determination frequency and the step-out determination time may be set as appropriate based on the rotating machine 5, the size of a load connected thereto, and the moment of inertia. For example, in the case where the load is high and the moment of inertia is small, if the step-out determination frequency is not set to a high frequency, stoppage is instantly caused once free run occurs. On the other hand, in the case where the load is low and the moment of inertia is great, a time slot for free run may be secured even if the step-out determination frequency is lowered. The step-out determination time has to be set in such a way as to secure a total of at least five timings of rise and fall of the digital signals. The reason is that, to estimate the rotation direction, a full cycle of magnetic pole position angles has to be completed, and, for example, if a rise (on) timing of the U-V digital signal is taken as the starting point (first timing), the rise (on) timing of the next U-V digital signal after one cycle is the fifth timing. On the other hand, if the step-out determination time is set long, the number of times of detection of the digital signals is increased, but the time slot of free run is increased, and the rotating machine 5 is possibly stopped, and thus, setting has to be carefully performed.

### (Step-Out Determination Unit)

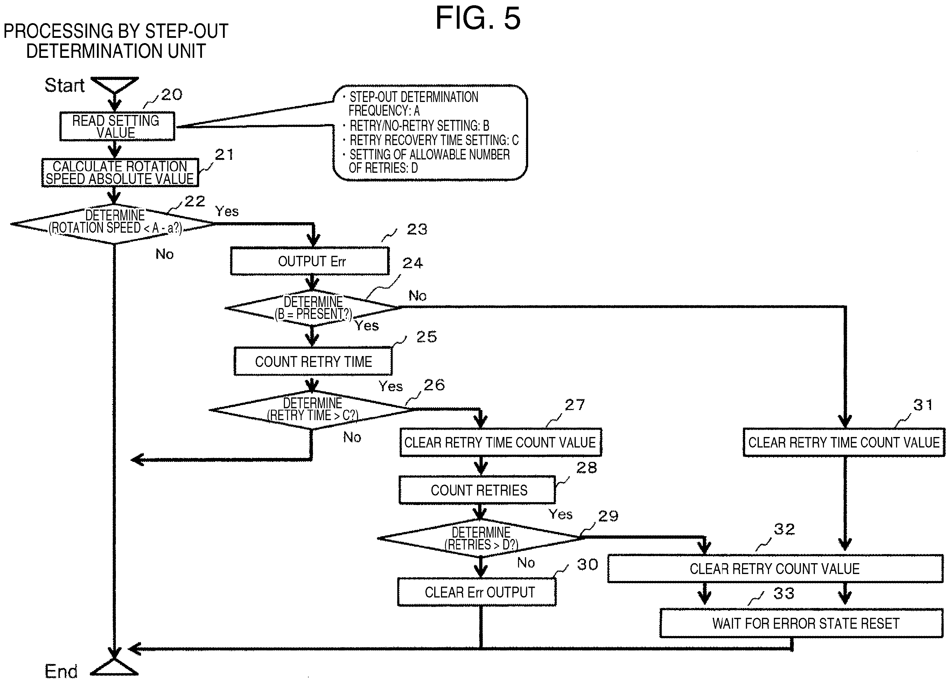

FIG. 5 shows a flowchart of the step-out determination unit. FIG. 5 is a flowchart for the scope of the step-out determination unit 8 shown in FIG. 1. For example, the step-out determination unit 8 has a function of determining step-out by detecting a rise from on to off of a digital signal from the frequency detection unit 6 shown in FIG. 1, and of causing the switching circuit 4 to stop or operate. Specifically, first, the step-out determination frequency A, retry/no-retry setting B, retry recovery time setting C, and setting D of allowable number of retries, which are set in the storage unit 14, are read in "read setting value" 20 in FIG. 5. Next, in rotation speed conversion 21, the rotation speed output from the speed reproducer 12 is converted to frequency, and then, an absolute value is calculated so that the same process as in the case of forward rotation may be performed in the case of reverse rotation of the rotating machine 5. Then, in the case where the rotation speed is greater than a threshold obtained by subtracting an allowable value a from the step-out determination frequency A, no action is taken, but in the case where the rotation speed is smaller, it is determined that the rotating machine 5 is stepped out and is not rotating, and a step-out signal is output in "output Err" 23. The allowable value a here is set in advance taking into account the deceleration occurring from the time when the rotating machine 5 reached a free run state until the process in the "determine" 22. Next, presence/absence of retry setting is determined in "determine" 24, and in the case of presence, a retry time count value is counted in "count retry time" 25. In the case of absence of retry setting, the retry time count value counted in the "count retry time" 25 in a previous or even earlier process cycle is cleared in "clear retry time count value" 31. Then, a retry count value is cleared in "clear retry count value" 32, and a state of waiting for reset of an error state is reached in "wait for error state reset" 33. In the state of waiting for reset of an error state, the main power of the system is shut off, and transition to another process does not take place until the main power is turned on again, or a reset command is input from outside and the error is reset. Next, in "determine" 26, the retry recovery time setting C and the retry time count value counted in the "count retry time" 25 are compared against each other, and in the case where the retry recovery time setting C is greater, no action is taken. On the other hand, in the case where the retry recovery time setting C is smaller, the retry time count value counted in the "count retry time" 25 is cleared in "clear retry time count value" 27. Next, the retries are counted in "count retries" 28. Next, in "determine" 29, the retry count value counted in the "count retries" 28 is compared against the setting D of allowable number of retries, and in the case where the setting D of allowable number of retries is greater, a step-out detection signal Err output is cleared in "clear Err output" 30. On the other hand, in the case where the setting D of allowable number of retries is smaller, the retry count value is cleared in the "clear retry count value" 32, and the state of waiting for reset of an error state is reached in the "wait for error state reset" 33. The power conversion device and the power conversion device control method which enable highly reliable step-out detection without the use of a magnetic pole position sensor can thus be provided.

### REFERENCE SIGNS LIST

1 AC power source
2 rectifier
3 smoothing capacitor
4 switching circuit
5 rotating machine
6 frequency detection unit
7 PWM controller
8 step-out determination unit
9 circuit breaker
10 speed command setter
11 speed control unit
12 speed reproducer
13 step-out determination process setting value group
14 storage unit
15A, 15B, 15C divider resistor
16A, 16B, 16C input filter
17A, 17B comparator
18A, 18B output filter
19A, 19B pull-up resistor
20 read setting value
21 calculate rotation speed absolute value
22 determine (rotation speed < A - a?)
23 output Err
24 determine (B = present?)
25 count retry time
26 determine (retry time > C?)
27 clear retry time count
28 count retries
29 determine (retries > D?)
30 clear Err output
31 clear retry time count value
32 clear retry count value
33 wait for error state reset

## Claims

1. A power conversion device comprising:
a frequency detection unit (6) configured to generate a digital signal containing information about a rotation speed, a rotation direction, and a magnetic pole position of a rotating machine (5), based on an induced voltage of the rotating machine (5) when the rotating machine (5) is in a free run state;
a speed reproducer (12) configured to estimate the rotation speed, the rotation direction, and the magnetic pole position of the rotating machine (5) based on the digital signal generated by the frequency detection unit (6); and
a step-out determination unit (8) configured to determine a step-out state of the rotating machine (5) based on the rotation speed, the rotation direction, and the magnetic pole position estimated by the speed reproducer (12),
wherein the speed reproducer (12) operates only when the rotating machine (5) is in the free run state, and
wherein the step-out determination unit (8) is configured to determine the step-out state by comparing the rotation speed against a threshold set in advance.

2. The power conversion device according to claim 1,
wherein the frequency detection unit (6) is configured to generate the digital signal based on a magnitude relationship of induced voltages of three phases between the rotating machine (5) and the power conversion device.

3. The power conversion device according to claim 1,
wherein the speed reproducer (12) is configured to estimate the rotation speed, the rotation direction, and the magnetic pole position of the rotating machine (5) based on an on or off state of the digital signal.

4. The power conversion device according to claim 1,
wherein the speed reproducer (12) is configured to estimate one of the rotation speed, the rotation direction, and the magnetic pole position based on a time difference between on/off timings of the digital signal.

5. The power conversion device according to claim 1,
wherein the frequency detection unit (6) is configured to generate the digital signal containing the information about the rotation speed, the rotation direction, and the magnetic pole position of the rotating machine (5), based on an induced voltage of the rotating machine (5) obtained by turning off a switching circuit (4) after the rotating machine (5) has reached a first frequency and then accelerating the rotating machine (5) again after a lapse of a first period of time.

6. A power conversion device control method comprising:
a frequency detection step of generating a digital signal containing information about a rotation speed, a rotation direction, and a magnetic pole position of a rotating machine (5), based on an induced voltage of the rotating machine (5) when the rotating machine (5) is in a free run state;
a speed reproduction step of estimating the rotation speed, the rotation direction, and the magnetic pole position of the rotating machine (5) based on the digital signal generated in the frequency detection step; and
a step-out determination step of determining a step-out state of the rotating machine (5) based on the rotation speed, the rotation direction, and the magnetic pole position estimated in the speed reproduction step,
wherein, in the speed reproduction step, a speed reproducer (12) operates only when the rotating machine (5) is in the free run state, and
wherein, in the step-out determination step, the step-out state is determined by comparing the rotation speed against a threshold set in advance.

7. The power conversion device control method according to claim 6,
wherein, in the frequency detection step, the digital signal is generated based on a magnitude relationship of induced voltages of three phases between the rotating machine (5) and a power conversion device.

8. The power conversion device control method according to claim 6,
wherein, in the speed reproduction step, the rotation speed, the rotation direction, and the magnetic pole position of the rotating machine (5) are estimated based on an on or off state of the digital signal.

9. The power conversion device control method according to claim 6,
wherein, in the speed reproduction step, one of the rotation speed, the rotation direction, and the magnetic pole position is estimated based on a time difference between on/off timings of the digital signal.

10. The power conversion device control method according to claim 7,
wherein, in the frequency detection step, the digital signal containing the information about the rotation speed, the rotation direction, and the magnetic pole position of the rotating machine (5) is generated based on an induced voltage of the rotating machine (5) obtained by turning off a switching circuit (4) after the rotating machine (5) has reached a first frequency and then accelerating the rotating machine (5) again after a lapse of a first period of time.

## Patentansprüche

1. Leistungswandlervorrichtung, die Folgendes umfasst:
eine Frequenzdetektionseinheit (6), die ausgelegt ist, um ein digitales Signal, das Informationen über eine Drehzahl, eine Drehrichtung und eine Position eines magnetischen Pols einer Drehmaschine (5) enthält, basierend auf einer induzierten Spannung der Drehmaschine (5), wenn die Drehmaschine (5) sich in einem freien Laufzustand befindet, zu erzeugen;
eine Drehzahl-Wiedergabeeinheit (12), die ausgelegt ist, um die Drehzahl, die Drehrichtung und die Position eines magnetischen Pols der Drehmaschine (5) basierend auf dem durch die Frequenzdetektionseinheit (6) erzeugten digitalen Signal zu schätzen; und
eine Außer-Tritt-Bestimmungseinheit (8), die ausgelegt ist, um einen Außer-Tritt-Zustand der Drehmaschine (5) basierend auf der Drehzahl, der Drehrichtung und der Position des magnetischen Pols, die durch die Drehzahl-Wiedergabeeinheit (12) geschätzt werden, zu bestimmen,
wobei die Drehzahl-Wiedergabeeinheit (12) nur dann betrieben wird, wenn sich die Drehmaschine (5) im freien Laufzustand befindet und
wobei die Außer-Tritt-Bestimmungseinheit (8) ausgelegt ist, um den Außer-Tritt-Zustand durch Vergleichen der Drehzahl mit einem zuvor festgelegten Schwellenwert zu bestimmen.

2. Leistungswandlervorrichtung nach Anspruch 1,
wobei die Frequenzdetektionseinheit (6) ausgelegt ist, um das digitale Signal basierend auf einem Verhältnis der Größenordnung von induzierten Spannungen von drei Phasen zwischen der Drehmaschine (5) und der Leistungswandlervorrichtung zu erzeugen.

3. Leistungswandlervorrichtung nach Anspruch 1,
wobei die Drehzahl-Wiedergabeeinheit (12) ausgelegt ist, um die Drehzahl, die Drehrichtung und die Position des magnetischen Pols der Drehmaschine (5) basierend auf einem Ein- oder Aus-Zustand des digitalen Signals zu schätzen.

4. Leistungswandlervorrichtung nach Anspruch 1,
wobei die Drehzahl-Wiedergabeeinheit (12) ausgelegt ist, um eine aus der Drehzahl, der Drehrichtung und der Position des magnetischen Pols basierend auf einer Differenz zwischen Ein/Aus-Zeitpunkten des digitalen Signals zu schätzen.

5. Leistungswandlervorrichtung nach Anspruch 1,
wobei die Frequenzdetektionseinheit (6) ausgelegt ist, um das digitale Signal, das die Informationen über die Drehzahl, die Drehrichtung und die Position eines magnetischen Pols der Drehmaschine (5) enthält, basierend auf einer induzierten Spannung der Drehmaschine (5) zu erzeugen, die durch Ausschalten eines Schaltschaltkreises (4), nachdem die Drehmaschine (5) eine erste Frequenz erreicht hat, und dann durch erneutes Beschleunigen der Drehmaschine (5) nach dem Verstreichen einer ersten Zeitspanne erhalten wird.

6. Steuerverfahren für eine Leistungswandlervorrichtung, das Folgendes umfasst:
einen Frequenzdetektionsschritt zum Erzeugen eines digitalen Signals, das Informationen über eine Drehzahl, eine Drehrichtung und eine Position eines magnetischen Pols einer Drehmaschine (5) enthält, basierend auf einer induzierten Spannung der Drehmaschine (5), wenn die Drehmaschine (5) sich in einem freien Laufzustand befindet;
eine Drehzahl-Wiedergabeschritt zum Schätzen der Drehzahl, der Drehrichtung und der Position eines magnetischen Pols der Drehmaschine (5) basierend auf dem in dem Frequenzdetektionsschritt erzeugten digitalen Signal; und
einen Außer-Tritt-Bestimmungsschritt zum Bestimmen eines Außer-Tritt-Zustands der Drehmaschine (5) basierend auf der Drehzahl, der Drehrichtung und der Position eines magnetischen Pols, die in dem Drehzahl-Wiedergabeschritt geschätzt wurden,
wobei in dem Drehzahl-Wiedergabeschritt eine Drehzahl-Wiedergabeeinheit (12) nur dann betrieben wird, wenn sich die Drehmaschine (5) in dem freien Laufzustand befindet und
wobei in dem Drehzahl-Wiedergabeschritt der Außer-Tritt-Zustand durch Vergleichen der Drehzahl mit einem zuvor festgelegten Schwellenwert bestimmt wird.

7. Steuerverfahren für eine Leistungswandlervorrichtung nach Anspruch 6,
wobei das digitale Signal in dem Frequenzdetektionsschritt basierend auf einem Verhältnis der Größenordnung von induzierten Spannungen von drei Phasen zwischen der Drehmaschine (5) und einer Leistungswandlervorrichtung erzeugt wird.

8. Steuerverfahren für eine Leistungswandlervorrichtung nach Anspruch 6,
wobei die Drehzahl, die Drehrichtung und die Position eines magnetischen Pols der Drehmaschine (5) in dem Drehzahl-Wiedergabeschritt basierend auf einem Ein- oder Aus-Zustand des digitalen Signals geschätzt werden.

9. Steuerverfahren für eine Leistungswandlervorrichtung nach Anspruch 6,
wobei eine aus der Drehzahl, der Drehrichtung und der Position eines magnetischen Pols in dem Drehzahl-Wiedergabeschritt basierend auf einer Zeitdifferenz zwischen Ein/Aus-Zeitpunkten des digitalen Signals geschätzt wird.

10. Steuerverfahren für eine Leistungswandlervorrichtung nach Anspruch 7,
wobei das digitale Signal, das die Informationen über die Drehzahl, die Drehrichtung und die Position eines magnetischen Pols der Drehmaschine (5) in dem Frequenzdetektionsschritt enthält, basierend auf einer induzierten Spannung der Drehmaschine (5) erzeugt wird, die durch Ausschalten eines Schaltschaltkreises (4), nachdem die Drehmaschine (5) eine erste Frequenz erreicht hat, und dann durch erneutes Beschleunigen der Drehmaschine (5) nach Verstreichen einer ersten Zeitspanne erhalten wird.

## Revendications

1. Dispositif de conversion de puissance, comprenant :
une unité de détection de fréquence (6) configurée pour générer un signal numérique contenant des informations sur une vitesse de rotation, une direction de rotation et une position des pôles magnétiques d'une machine rotative (5), sur la base d'une tension induite de la machine rotative (5) lorsque la machine rotative (5) est dans un état non asservi ;
un reproducteur de vitesse (12) configuré pour estimer la vitesse de rotation, la direction de rotation et la position des pôles magnétiques de la machine rotative (5) sur la base du signal numérique généré par l'unité de détection de fréquence (6) ; et
une unité de détermination de sortie (8) configurée pour déterminer un état de sortie de la machine rotative (5) sur la base de la vitesse de rotation, de la direction de rotation et de la position des pôles magnétiques estimées par le reproducteur de vitesse (12),
dans lequel le reproducteur de vitesse (12) fonctionne uniquement lorsque la machine rotative (5) est dans l'état non asservi, et
dans lequel l'unité de détermination de sortie (8) est configurée pour déterminer l'état de sortie en comparant la vitesse de rotation à un seuil établi à l'avance.

2. Dispositif de conversion de puissance selon la revendication 1,
dans lequel l'unité de détection de fréquence (6) est configurée pour générer le signal numérique sur la base d'une relation d'amplitude de tensions induites de trois phases entre la machine rotative (5) et le dispositif de conversion de puissance.

3. Dispositif de conversion de puissance selon la revendication 1,
dans lequel le reproducteur de vitesse (12) est configuré pour estimer la vitesse de rotation, la direction de rotation et la position des pôles magnétiques de la machine rotative (5) sur la base d'un état de marche ou d'arrêt du signal numérique.

4. Dispositif de conversion de puissance selon la revendication 1,
dans lequel le reproducteur de vitesse (12) est configuré pour estimer l'une de la vitesse de rotation, de la direction de rotation et de la position des pôles magnétiques sur la base d'une différence de temps entre des cadencements de marche/arrêt du signal numérique.

5. Dispositif de conversion de puissance selon la revendication 1,
dans lequel l'unité de détection de fréquence (6) est configurée pour générer le signal numérique contenant les informations concernant la vitesse de rotation, la direction de rotation et la position des pôles magnétiques de la machine rotative (5), sur la base d'une tension induite de la machine rotative (5) obtenue en coupant un circuit de commutation (4) après que la machine rotative (5) a atteint une première fréquence et en accélérant ensuite à nouveau la machine rotative (5) après un laps de temps d'une première période de temps.

6. Procédé de commande de dispositif de conversion de puissance, comprenant :
une étape de détection de fréquence consistant à générer un signal numérique contenant des informations sur une vitesse de rotation, une direction de rotation et une position des pôles magnétiques d'une machine rotative (5), sur la base d'une tension induite de la machine rotative (5) lorsque la machine rotative (5) est dans un état non asservi ;
une étape de reproduction de vitesse consistant à estimer la vitesse de rotation, la direction de rotation et la position des pôles magnétiques de la machine rotative (5) sur la base du signal numérique généré dans l'étape de détection de fréquence ; et
une étape de détermination de sortie configurée pour déterminer un état de sortie de la machine rotative (5) sur la base de la vitesse de rotation, de la direction de rotation et de la position des pôles magnétiques estimés dans l'étape de reproduction de vitesse,
dans lequel dans l'étape de reproduction de vitesse, un reproducteur de vitesse (12) fonctionne uniquement lorsque la machine rotative (5) est dans l'état non asservi, et
dans lequel, dans l'étape de détermination de sortie, l'état de sortie est déterminé en comparant la vitesse de rotation à un seuil établi à l'avance.

7. Procédé de commande de dispositif de conversion de puissance selon la revendication 6,
dans lequel, dans l'étape de détection de fréquence, le signal numérique est généré sur la base d'une relation d'amplitude de tensions induites de trois phases entre la machine rotative (5) et un dispositif de conversion de puissance.

8. Procédé de commande de dispositif de conversion de puissance selon la revendication 6,
dans lequel, dans l'étape de reproduction de vitesse, la vitesse de rotation, la direction de rotation et la position des pôles magnétiques de la machine rotative (5) sont estimées sur la base d'un état de marche ou d'arrêt du signal numérique.

9. Procédé de commande de dispositif de conversion de puissance selon la revendication 6,
dans lequel, dans l'étape de reproduction de vitesse, l'une de la vitesse de rotation, de la direction de rotation et de la position des pôles magnétiques est estimée sur la base d'une différence de temps entre des cadencements de marche/arrêt du signal numérique.

10. Procédé de commande de dispositif de conversion de puissance selon la revendication 7,
dans lequel dans l'étape de détection de fréquence, le signal numérique contenant les informations concernant la vitesse de rotation, la direction de rotation et la position des pôles magnétiques de la machine rotative (5) est généré sur la base d'une tension induite de la machine rotative (5) obtenue en coupant un circuit de commutation (4) après que la machine rotative (5) a atteint une première fréquence et en accélérant ensuite à nouveau la machine rotative (5) après un laps de temps d'une première période de temps.
